Europäisches Patentamt

European Patent Office

Office européen des brevets

(19)

(11) Publication number: **0 414 785 B1**

# EUROPEAN PATENT SPECIFICATION

(45) Date of publication of patent specification: **13.07.94**   (51) Int. Cl.⁵: **F03D  1/04**, F03B 17/06

(21) Application number: **89906160.0**

(22) Date of filing: **15.05.89**

(86) International application number:
**PCT/GB89/00524**

(87) International publication number:
**WO 89/11594 (30.11.89 89/28)**

(54) **DEVICES FOR EXTRACTING POWER FROM A MOVING FLUID.**

(30) Priority: **16.05.88 GB 8811523**

(43) Date of publication of application:
**06.03.91 Bulletin  91/10**

(45) Publication of the grant of the patent:
**13.07.94 Bulletin  94/28**

(84) Designated Contracting States:
**DE FR GB**

(56) References cited:
**CH-A- 576 588
DE-A- 2 402 647
DE-C- 823 430
FR-A- 529 301
FR-A- 2 466 637**

(73) Proprietor: **REID, Alister Ure
AU Reis & Associates
6 West Harbour Road
Charlestown
Fife KY11 3ET(GB)**

(72) Inventor: **REID, Alister Ure
AU Reis & Associates
6 West Harbour Road
Charlestown
Fife KY11 3ET(GB)**

(74) Representative: **Hackett, Sean James et al
MARKS & CLERK,
57-60 Lincoln's Inn Fields
London WC2A 3LS (GB)**

## Description

This invention relates to devices for extracting power from a moving fluid and in particular, but not exclusively, to devices for extracting power from the wind.

A known device for extracting power from the wind involves the use of open turbine blades which are rotatable about a horizontal axle. In order to provide enough power to be worthwhile, such devices must have large blades, and to accommodate the blades, the support column must be relatively slender. A slender support column also allows slewing of the headgear and blades over 360°. These factors tend to limit the strength of large devices, particularly as these devices are subject to uneven stresses and loads. For example, the stresses on each blade during each revolution change because the mass of the blade acts in the direction of rotation during half of the revolution, and contrary to the direction of rotation during the other half of the revolution. In addition, the wind loading on each blade is reduced when the blade passes in front of the support column so as to cause a change in the induced stress in the blade.

Additional uneven loads and stresses are applied to this type of device by virtue of the fact that the wind velocity is generally greater at higher levels compared with the velocity at ground level.

Although these difficulties can be overcome to some extent by using a robust assembly and heavy blades, this in itself leads to the difficulty that the stall speed of the device is increased.

These large devices are also cumbersome in that they require a significant amount of power in order to keep the turbine blades facing directly into the wind. Owing to the large mass of the headgear and blades, the devices are slow to respond to changes in wind direction, and so power is lost by virtue of the fact that the device takes a number of seconds to change direction. This problem is particularly noticable in cases where the direction of the wind is constantly changing.

Alternative devices for extracting power from the wind or wind generators have been devised. Many of these rely on the Venturi principle. For example, British patent specification 1,539,566 describes a wind turbine having rotor blades which are surrounded by a Venturi-shaped shroud. In this device, the air stream which drives the turbine blades does not change direction and is essentially coaxial with the air stream which passes around the shroud.

The disadvantage with this type of device is that attempts to increase the air intake by, for example, including a hood on the intake tends to diminish the creation of the low pressure region at the downstream end of the device. In these devices, the air stream incident on the device is divided so that some passes through the device while the rest passes around the shroud.

Another previously proposed system is described in European patent specification No 0 135 799. In this device, a wind turbine, driven in a similar manner to a water wheel, is positioned in a chimney. Only the stream of air which is intaken into the chimney contributes to the generation of power. This device poses difficulties in that downdrafts may occur as the exhaust from the chimney is not protected from the wind. Another difficulty with this device is that the orientation of the intake port or ports is fixed and therefore the device cannot continuously respond to changes in the direction of the wind.

French patent specification 5294301 discloses a device for extracting power from the wind which comprises an air intake hood for directing the incoming air stream through a prime mover. The air stream exiting from the prime mover discharges from a lower portion of the device after passing through a discharge passage slightly flared over its whole length. There is no large increase in the cross sectional area of the passage immediately following the prime mover and consequently no substantial fall in the velocity of the air stream passing across the prime mover.

German patent specification 2402647 also relates to a device for extracting power from wind by means of a prime mover situated at one end of a discharge channel. There is no substantial fall in velocity of the air stream as it passes through the prime mover since the cross sectional area of the discharge passage is only marginally greater than the cross sectional area of the prime mover.

It is an aim of the present invention to overcome or at least alleviate the aforementioned problems and to provide a device which extracts power from the wind with an improved efficiency.

According to the present invention, there is provided a device for extracting power from a moving fluid comprising: a housing having a prime mover rotatably mounted therein, which housing is configured for shielding the prime mover from a first fluid stream which is incident on the device, and for directing the first fluid stream around the housing so that the first fluid stream does not interact directly with the prime mover; an inlet port which is spaced apart from the housing for receiving a second fluid stream which is incident on the device at said inlet port so that the first and second fluid streams, when incident on the device, are at least substantially independent of one another, the inlet port being arranged for directing the second fluid stream into the housing via an opening immediately upstream of the prime mover for driving the prime mover; and an outlet port for permitting the second fluid stream to leave the housing; wherein the housing surrounding the prime mover has a volume which is substantially larger than that of the prime mover so that the cross- sectional area of the opening in a direction transverse to the flow direction through the opening of the second fluid stream is substantially smaller than the cross-sectional area of the housing through which the second fluid stream transversely passes as the second fluid stream discharges from the prime mover, whereby the second fluid stream undergoes a substantial fall in velocity across the prime mover, and is deflected by the prime mover so as to flow radially or at least partially axially with respect to the rotational axis of the prime mover, the housing being configured so that the first fluid stream around the housing and past the outlet port is such as to give rise to a suction effect at the outlet port thereby enhancing power extraction from the moving fluid.

The fluid may be air, the device being arranged for extracting power from the wind. Alternatively, the device could be used to generate hydroelectric or hydromechanical power.

In a preferred embodiment of the invention, the prime mover is provided with a plurality of vanes profiled to offer resistance to the second air stream passing between the inlet and the outlet ports. The profile of the vanes may be such that air passing over them has a pressure effect which causes the prime mover to rotate. Alternatively, the profile of the vanes may be such that the second air stream passing through the housing exerts a suction directly onto them which drives the prime mover.

The prime mover may be configured so that the airflow passing the vanes is substantially radial. In this case, the prime mover may be generally cylindrical in form having a cavity therein into which the second air stream is received along the rotational axis of the prime mover. The second air stream is then directed so as to flow radially outwardly (that is, in a direction substantially perpendicular to the rotational axis of the prime mover) of the prime mover past the vanes situated around the periphery thereof.

Alternatively, the prime mover may be configured so that it is caused to rotate by an airflow which flows substantially axially therethrough. In this case, the vanes may be positioned substantially axially within the body of the prime mover so as to extend to the periphery thereof in order that the second airflow enters and leaves the body of the prime mover substantially axially.

For either radial or axial airflows, the profile of the vanes may be such that the wind drives the prime mover by pressure reaction or suction reaction or a combination thereof.

Means is preferably provided for maintaining the inlet port and exhaust systems in alignment with the wind. The housing may be provided with a hood at the inlet port for enhancing the quantity of wind directed into the device.

The maintaining means may be in the form of vanes or a rudder, mounted on the housing, against which the wind blows when the housing is out of alignment. Power slewing means may be provided in addition to or in alternative to the rudder. Power slewing means would be a motor driven arrangement.

The prime mover may be rotatably mounted on a fixed structure via a bearing arrangement.

The housing may be supported by bearings on the fixed structure thereby enabling the housing to move into alignment with the wind in response to the wind acting against the vanes or the rudder or the power slewing means.

Airflow control means may be provided for varying the ratio of the effective cross-sectional area of the inlet port or the outlet ports to the effective combined cross-sectional area of air passages through the prime mover.

The air flow control means is preferably coupled to a governor so that as the wind speed varies, the airflow control means is operative for reducing the effective combined cross-sectional area of the air passages of the prime mover.

The airflow control means may be in the form of one or more wedge shaped members positioned within the cavity of the prime mover. Alternatively, the vanes of the prime mover may be pivotally mounted and linked to a governor so that they pivot to reduce the effective combined cross-sectional area of the passages between the vanes as the wind speed varies.

Distribution means may be provided in the prime mover for influencing distribution of the airflow passing over the vanes. The distribution means is preferably configured so as to distribute the airflow passing over the vanes substantially evenly over the length thereof.

The distribution means may be in the form of one or more diaphragms positioned in planes extending perpendicular to the rotational axis of the prime mover. Alternatively, a generally conically formed member may be positioned around the rotational axis of the prime mover, the member having a cross-sectional area which increases as the distance from the point of entry from the airflow into the prime mover increases.

The inlet port of the housing may be provided with vanes, fixed with respect to the housing, for creating or enhancing streamline flow of the second air stream into the prime mover.

In embodiments of the invention, a pressure relief valve may be provided in the vicinity of the intake port for reducing excessive air pressure in the intake port of the device.

EP 0 414 785 B1

In embodiments of the invention, a suction relief valve may be provided in the housing of the device in order to alleviate excessive pressure differentials between the exterior and interior of the device. Preferably, the suction relief valve is positioned upstream of the first air stream.

The housing may be configured so that Venturi ducts are formed in the vicinity of the exhaust port, the Venturi ducts receiving the first air stream at the upstream end thereof, the air stream from the prime mover mixing at the outlet ports with the first air stream at the downstream end of the Venturi duct.

Formation of one or more Venturi ducts in this way enhances the pressure differential across the device.

An aerofoil section may be formed on the housing in the vicinity of the outlet port in order to enhance the air pressure differential between the inlet and outlet ports.

The rotational axis of the prime mover may be disposed horizontally or vertically.

In embodiments of the invention, the housing may be configured so as to have a plurality of outlet ports.

In this case, the first air stream can be divided into separate spaced apart air streams, one for each of the outlet ports.

A braking device for stopping and holding the prime mover may be provided for making the device secure during maintenance or in case of mechanical breakdown or for speed control purposes.

Means may be provided for closing the inlet port during, for example, in adverse climate conditions, e.g. a snow storm to prevent the internal ports becoming blocked.

Embodiments of the invention utilize two separate air streams in order to generate power, whereas the prior art devices make use of only one single air stream, which is sometimes divided into coaxial streams. In embodiments of the invention, the air stream which drives the prime mover directly, changes direction so as not to interfere with the first air stream prior to driving the prime mover. The wind energy can be extracted from the second air stream by means of the prime mover. The pressure differential across the prime mover is enhanced by the first air stream flowing around the housing and creating a low pressure at the outlet ports positioned at the downstream end of the housing.

Since the first and second air streams are separated, embodiments of the present invention have the advantage that means, for example the hood, may be provided for directing an increased quantity of air into the inlet port without having an adverse influence on the maintenance of low pressure at the outlet port. Embodiments of the invention have the advantage that reverse drafts are prevented.

Embodiments of the invention are also advantageous in that they are relatively safe since the moving prime mover is contained within the housing. The prime mover, being preferably orientated so that its rotational axis is substantially vertical, avoids the disadvantages associated with conventional wind generating devices and has the advantage that the power take-off means is located on the ground or mounted in the fixed support structure. In addition, a more substantial tower structure can be used to support embodiments of the invention.

Initial tests have indicated that embodiments of the invention may have an efficiency of more than 45% (when the wind speed rises above 8 knots) in terms of the mechanical power extraction relative to the power in the wind. This performance is in excess of the published performance for some existing small commercial turbines of conventional design where the extraction efficiency ranges up to 25% at the rated electrical power output, usually at a wind speed of about 20 knots. In general terms, it seems that the power output for all propeller driven turbines of conventional design cannot be greater than 60% in accordance with the Betz formula assuming no losses and that the maximum performance when allowance is made for losses is usually between 40% and 45% for a well designed and fabricated high speed turbine. Thus, the performance graphs for some recently constructed high speed machines show that the efficiency is about 20% at wind speeds of about 10 knots which rises to about 42% at about 20 knots to 25 knots and the efficiency falls away again to about 20% at the maximum rated output at about 40 knots.

The sensitivity of embodiments of the present invention to changes in the direction of the wind is improved since it is only necessary to move the housing in order to direct the inlet port and exhaust systems in proper alignment with the direction of the oncoming wind.

In embodiments, the velocity of the air is reduced as it passes into the intake and prior to passing the prime mover. This contracts with prior art coaxial devices in which the air passing through the intake is sometimes caused to accelerate.

The invention will now be further described, by way of example with reference to the accompanying drawings, in which:

Figures 1a and 1b respectively show sectional side elevational and sectional plan views of the first embodiment of the present invention;

Figure 2 is to be used to illustrate air pressure measurement in embodiments of the invention;

4

Figure 3 is a graph showing pressure against ratio of exhaust and intake port areas of an air vessel;

Figures 4a and 4b respectively show sectional side elevational and plan views of a prime mover for the embodiment of Figures 1a and 1b;

Figures 5a and 5b respectively show sectional side elevational and plan views of an alternative prime mover which may be used in the embodiment of Figures 1a and 1b;

Figures 6a and 6b respectively show sectional side and plan views of a further modified form of prime mover for the embodiment of Figures 1a and 1b;

Figures 7a and 7b are schematic sectional side elevational and plan views respectively of an alternative embodiment of the present invention; and

Figures 8a and 8b are sectional plan views illustrating pivotable vanes of a prime mover which may be incorporated in embodiments of the present invention.

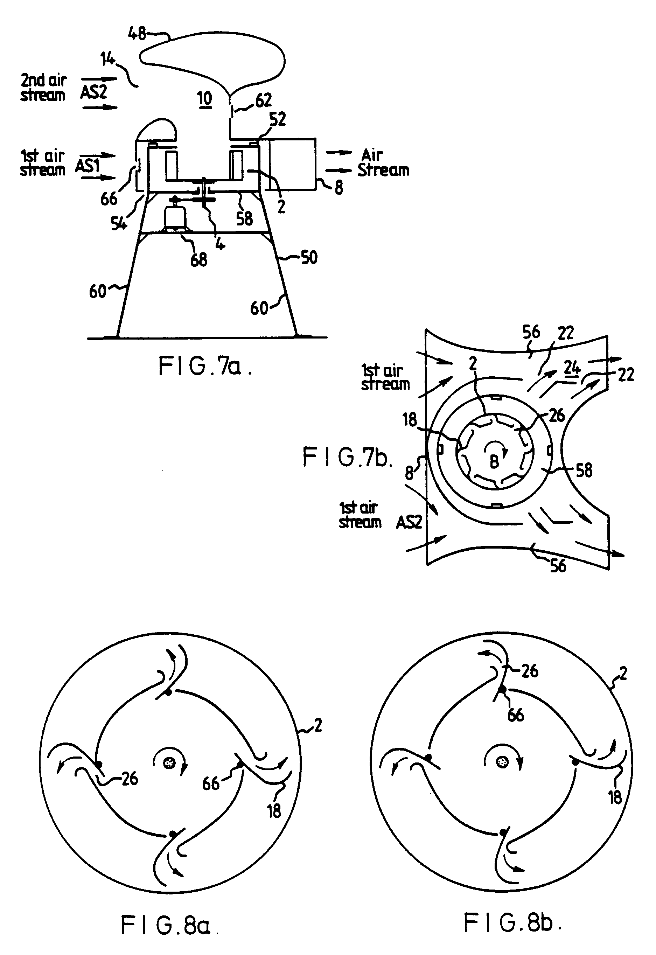

Figure 1a shows a prime mover 2 rotatably mounted on a vertical axis 4 by means of a bearing 6 (see Figure 5a). A housing 8 surrounds the prime mover 2, the housing 8 being mounted on a support structure (illustrated for example in Figure 7a).

The housing has an inlet port generally denoted by the reference numeral 10.

In this embodiment, a hood 12 is attached to the housing 8 and is shaped so that its open end 14 is directed into an oncoming second air stream AS2. The hood 12 causes the second air stream AS2 to change direction (illustrated by arrow A) so that it blows down onto the prime mover 2.

The force of the second air stream AS2 at the intake port 10 results in a high pressure zone being created in the region 16 of the device. This high pressure zone is maintained by ensuring that the effective combined area of air passages through the prime mover 2 is in accordance with design criteria as discussed later on.

On entering the prime mover 2, the second air stream AS2 is redirected (Arrow B) to pass a plurality of vanes 18 situated around the periphery of the prime mover 2.

In this embodiment, the prime mover 2 is generally cylindrically shaped and supported by the axis 4 at the lower end. The axis may support the prime mover 2 at the top end as well as the lower end if increased stability is desired.

A guard 20 is mounted on the housing 8 and is situated between the housing and the prime mover 2 in order to minimize leakage of air around the prime mover 2.

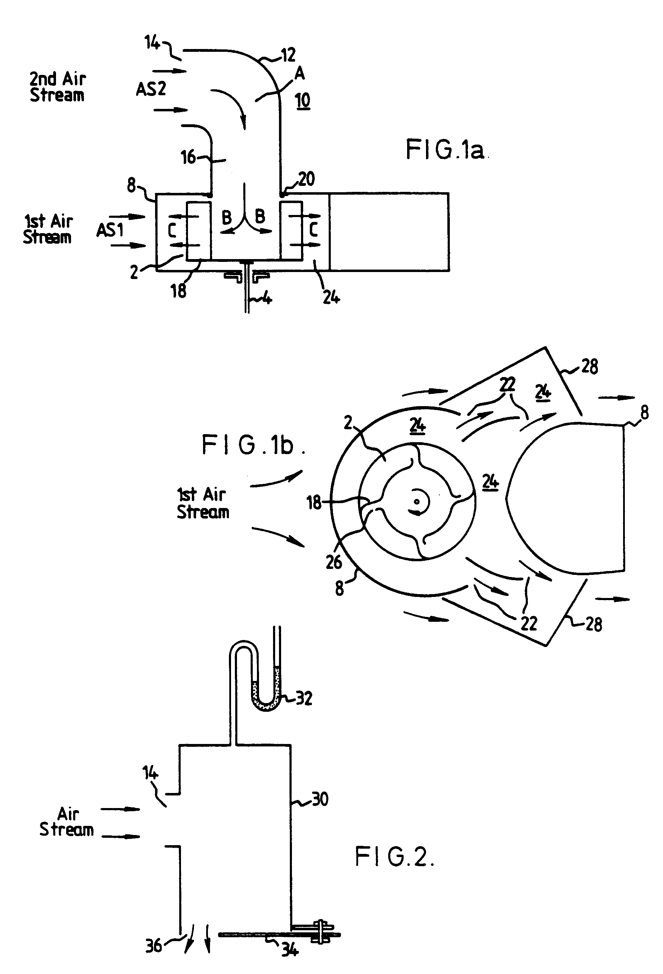

The second air stream AS2 passes over the vanes 18 in the direction shown by arrows C in Figure 1a. Figure 1b illustrates the configuration of outlet ports 22 for permitting the escape of air from the housing 8. The outlet ports 22 are located in the plane of a first air stream AS1. The first air stream AS1, which is spaced apart, and therefore independent of the second air stream AS2, flows around the exterior of the housing 8. As can be seen from Figure 1b, the exterior shape of the housing 8 is such that a low pressure zone is created at the outlet ports 22. This is due to acceleration of the first air stream AS1 as it passes the housing 8.

As can be seen from Figure 1b, the flow of the first air stream around the housing gives rise to two spaced apart air streams in the region of the outlet ports 22.

Figure 1b illustrates the shape of the vanes 18 of the prime mover 2. Four vanes 18 are illustrated, each having a corresponding air passage 26 for permitting air to pass through the prime mover 2. The profile of the vanes 18 in this embodiment is such that the flow of air through the passage 26 exerts a pressure reaction on the blades 18.

The creation of the high pressure zone 16 and the low pressure zone 24 together contribute to a pressure differential between the inlet port 14 and the outlet ports 22 which enables driving of the prime mover 2.

The housing 8 of Figure 1b is provided with aerofoils 28 in the region of the outlet ports 22. These aerofoils are shaped and positioned so as to enhance the low pressure region 24, thereby enhancing the pressure differential across the device. This results in an improvement of the efficiency of the device.

It is advantageous for the outlet ports 22 to be as large as possible. In some embodiments they may extend partly ahead of the positions of the shaft of the prime mover. The total cross-sectional area of the outlet ports is preferably equal to or greater than the effective cross-sectional area of the prime mover.

A significant factor influencing the pressure in the high pressure zone 16 is the effective combined cross sectional area of the air passage 26 relative to the effective cross-sectional area of the narrowest section in the inlet port 10 or the outlet port 22. Figure 2 illustrates how this pressure can be measured and varied. In Figure 2 the intake air stream, representing the second air stream AS2, causes an increase in pressure within the device. A casing 30 represents the hood 12 or the housing 8. The pressure within the casing 30 can be measured by means of a simple manometer 32. This pressure can be adjusted by means of a movable cover 34 which varies the effective cross-sectional area of the exhaust port 36.

5

The exhaust port 36 corresponds, in embodiments of the invention, to the effective combined cross-sectional area of the air passages 26 of the prime mover 2.

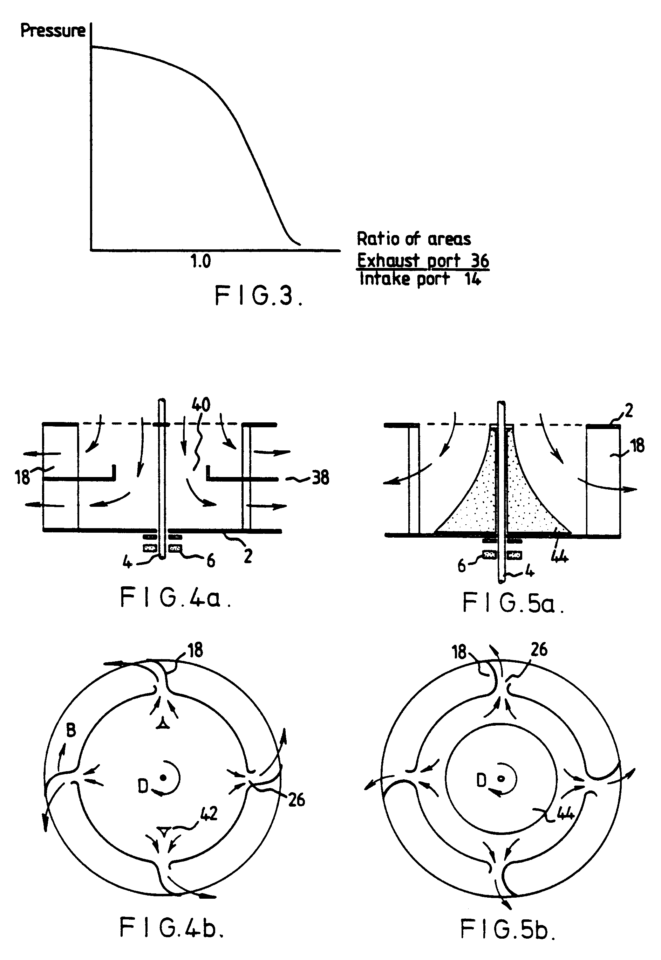

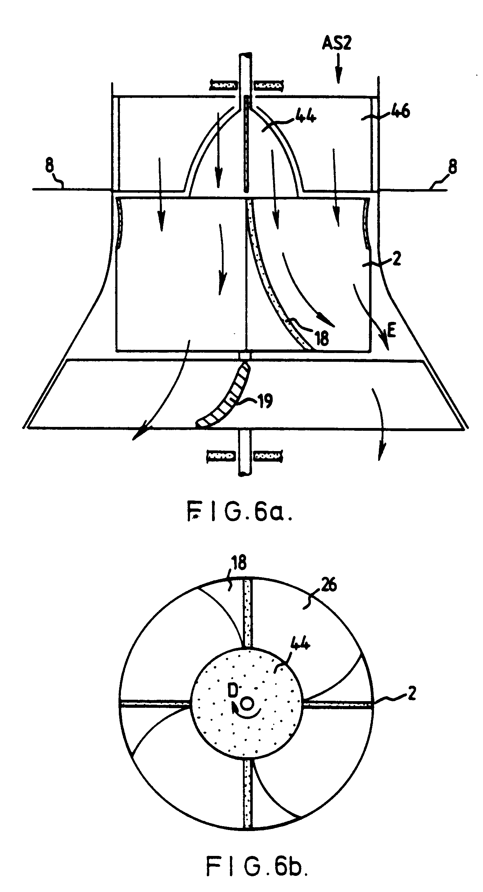

Figure 3 illustrates the effect of varying the effective cross-sectional area of the exhaust port 36 or air passages 26.

By varying the effective cross-sectional area of the exhaust port 36 by adjustment of the cover 34, the pressure within the casing 30 can be measured for various exhaust port areas. Once the velocity of the air stream through the casing 30 is steady, the pressure can be plotted against the ratio of the areas of the exhaust port 36 to the area of the intake port 14. The resulting graph, shown in Figure 3, shows that the pressure falls away rapidly when the ratio exceeds unity. That is to say, the area of the exhaust port 36 or the air passages 26 is preferably less than that of the intake port 14. A suitable combined area (ie the design criteria referred to above) for the air passages 26 of the prime mover 2 can be determined in this way.

A simplified equation for the power P available from a wind turbine can be expressed as

$$P = \frac{\rho . A . V . (V_a^2 - V_b^2)}{2}$$

Where $\rho$ is the density of the air, A is the effective cross-sectional area of the prime mover, V is the average velocity of the airstream flowing through the prime mover and $V_a$ and $V_b$ are the air velocities upstream and downstream of the prime mover. From this simple equation it is seen that the output P approaches a maximum when $V_b$ approaches zero.

Also, where an air stream flows along a passage with varying cross-section, the velocity varies inversely, thus

$$V_b = \frac{V_a \text{ (effective cross-sectional area of the prime mover)}}{\text{(effective cross-sectional area of the housing downstream of the prime mover)}}$$

$$\text{therefore: } V_b < V_a$$

A large cross-sectional area of the housing (downstream of the prime mover) relative to the area of the prime mover provides for deceleration of the velocity of the fluid at the point of discharge from the prime mover thus maximising the potential power extraction in accordance with the above equation.

By "large cross-sectional area of the housing (downstream of the prime mover)" is meant that the volume of the housing downstream of the prime mover is large so that when the fluid has passed the prime mover it flows into a relatively large chamber. As a consequence of this, the pressure rises as the velocity of the airflow falls before leaving the housing. Since the velocity of fluid in the part of the housing which is downstream (see zone C in Figure 1a) of the prime mover is low, a high proportion of the kinetic energy in the incident second stream is extracted by the device.

Protecting the second fluid stream from direct interference by the external airstream (first fluid stream) also enhances the deceleration of the second fluid stream. In effect, a large volume housing provides good conditions for a distinct deceleration stage in that power extraction process.

The low velocity fluid is "sucked" out of the housing via the outlet ports 22 by virtue of the low pressure region created at the outlet ports 22 by the flow of the first fluid stream around the housing.

Figures 4a and 4b illustrate a modified version of the prime mover 2 of Figures 1a and 1b. In this prime mover 2, a diaphragm 38 is positioned midway between the upper and lower ends of the prime mover 2. The major surface of the diaphragm 38 lies in a plane which is perpendicular to the rotational axis 4 of the prime mover 2. In this example, the prime mover 2 is supported by bearing 6 at its lower end. The diaphragm 38 has an opening 40 for permitting air of the second air stream AS2 to pass therethrough. The purpose of the diaphragm 38 is to distribute flow of air over the vanes 18 substantially uniformly over their length.

Figure 4b shows a sectional plan view of the prime mover 2 illustrating the airflow through the air passages 26. The pressure reaction of the flow of air on the vanes 18 causes the prime mover to rotate in the direction of arrow D.

Figure 4b illustrates an air control means in the form of wedge shaped members 42 which are linked to a governor (not shown) for urging them towards and into the air passages 26 as the wind speed varies. Movement of the wedge shaped members 42 into the air passages 26 leads to a reduction of the effective cross-sectional area of the air passages 26 thereby maintaining a relatively high pressure in the high pressure region 16. The wedge shaped members 42 may reduce or close the flow of air through the air passages 26 thereby increasing or maintaining the pressure differential across the remaining open or partially open air passages 26. Although only two wedge shaped members are illustrated in Figure 4b, all of the air passages 26 may be provided with them.

Figures 5a and 5b illustrate an alternative prime mover 2 which may be used in embodiments of the present invention. In this embodiment, a generally conically shaped member 44 is positioned around the axis 4 of the prime mover 2. The purpose of the conically shaped member 44 is to redirect the flow of air in the second air stream AS2 so that the flow of air over the vanes 18 is substantially uniform along the length thereof.

Figure 5b illustrates an alternative profile of vanes 18. In this case, the vanes 18 are profiled so that a suction reaction is created by the flow of air through the air passage 26 over the vanes 18. The suction reaction gives rise to drive of the prime mover 2.

In the examples of prime mover 2 illustrated above, the airflow enters the prime mover 2 substantially axially, and leaves substantially radially. This type of prime mover may be referred to as to "radial flow" prime mover.

Figures 6a and 6b illustrate another example of prime mover which may be incorporated in embodiments of the invention. The prime mover 2 illustrated in this example may be referred to as an "axial flow" prime mover. In this example, the second air stream AS2 enters the prime mover 2 in an axial direction and leaves in a substantially axial direction as indicated by arrow E in Figure 6a. The blades 18 of the prime mover 2 are profiled so that the flow of air over them gives rise to a pressure reaction at the blade which in turn drives the prime mover 2. The nature of the profile of the blades is illustrated in Figures 6a and 6b.

Immediately above the prime mover 2 of Figures 6a and 6b fixed vanes 46 are provided for streamlining the flow of air into the prime mover 2. The cone 44 is provided for enhancing uniformity of the flow of air over the blades 18.

Fixed vanes 19 are provided under the axial flow prime mover of Figure 6a. These vanes 19 are fixed relative to the housing 8 and serve to assist deceleration of the flow of air through the housing.

In the examples described above, a combination of blade profiles may be used including, for example, variable pitch blades, so that both pressure reaction and suction reaction gives rise to rotation of a single prime mover 2.

Figures 7a and 7b illustrate another embodiment of the present invention in which a rudder 48 is incorporated for ensuring that the exhaust system and the inlet port 14 are directed towards the incoming first and second air streams AS1 and AS2 respectively. The housing 8 is rotatably mounted on a tower structure 50 by means of bearings 52. A substantially air-tight seal 54 is provided between the housing 8 and the tower structure 50 in order to minimise a reduction in the pressure differential through air leakage.

From Figure 7a, it can be seen that the first and second air streams AS1 and AS2 are maintained independently from one another until after the second air stream AS2 has passed through the prime mover 2.

As illustrated in Figure 7b, Venturi ducts 56 are formed in the housing 8.

The prime mover 2 of this embodiment is provided with blades 18 which are profiled so that the prime mover 2 is driven by virtue of a pressure reaction exterted by the flow of air through the air passages 26. The tower structure 50 is provided with a platform 58 for supporting the prime mover 2. The position of four legs 60 of the tower structure 50 is schematically illustrated in Figure 7b.

A pressure relief valve 62 is provided in the intake region 10 of the device as shown in Figure 7a. The purpose of this valve is to permit the escape of air therethrough in the event that the pressure in the high pressure region exceeds desired levels.

A suction relief valve 66 is provided in the region of the housing 8 which is upstream of the first air stream AS1 for permitting the passage of air directly into the housing 8 in the event that the degree of low pressure in the low pressure region 24 exceeds desired levels.

An alternator 68 is supported on the tower structure 50 and coupled to the axle 4 of the prime mover 2 by means of a gearing system. Other power driven machines may be coupled to the prime mover 2, for example a water pump.

Figures 8a and 8b illustrate an alternative airflow control means. The prime mover 2 is provided with vanes 18 which are hinged or pivotally mounted about point 66. The vanes 18 are linked to a governor (not shown) which opens the vanes 18 so as to increase the effective combined cross-sectional area of the air passages 26 as the rotational speed of the prime mover 2 increases.

In embodiments of the invention, the second air stream generally undergoes at least two changes in direction as it passes through the device.

The prime mover is advantageously wholly contained within the housing which shields the prime mover from the external air stream and which provides a large volume chamber for receiving the discharge of the fluid at reduced velocity from the prime mover where the velocity of the fluid is further reduced as a distinct stage in the power extraction process before it leaves the chamber through the exhaust ports under the suction effect of the external air stream.

**Claims**

1. A device for extracting power from a moving fluid comprising: a housing (8) having a prime mover (2) rotatably mounted therein, which housing is configured for shielding the prime mover from a first fluid stream (AS 1) which is incident on the device, and for directing the first fluid stream around the housing so that the first fluid stream does not interact directly with the prime mover; an inlet port (14) which is spaced apart from the housing for receiving a second fluid stream (AS 2) which is incident on the device at said inlet port so that the first and second fluid streams, when incident on the device, are at least substantially independent of one another, the inlet port being arranged for directing the second fluid stream into the housing via an opening immediately upstream of the prime mover for driving the prime mover; and an outlet port (22) for permitting the second fluid stream to leave the housing; characterised in that the housing surrounding the prime mover has a volume which is substantially larger than that of the prime mover so that the cross-sectional area of the opening in a direction transverse to the flow direction through the opening of the second fluid stream is substantially smaller than the cross-sectional area of the housing through which the second fluid stream transversely passes as the second fluid stream discharges from the prime mover, whereby the second fluid stream undergoes a substantial fall in velocity across the prime mover, and is deflected by the prime mover so as to flow radially or at least partially axially with respect to the rotational axis of the prime mover, the housing being configured so that the first fluid stream around the housing and past the outlet port is such as to give rise to a suction effect at the outlet port thereby enhancing power extraction from the moving fluid.

2. A device according to Claim 1, wherein the fluid is either air, the device being arranged for extracting power from the wind; or water, the device being arranged for generating hydroelectric or hydromechanical power.

3. A device according to Claim 1 or Claim 2, wherein the prime mover (2) is provided with a plurality of vanes (18) profiled to offer resistance to the second fluid stream passing between the inlet and outlet ports, the prime mover being configured so that the fluid flow passing over the vanes flows in a direction substantially perpendicular to the rotational axis of the prime mover.

4. A device according to Claim 1 or Claim 2, wherein the prime mover (2) is provided with a plurality of vanes (18) profiled to offer resistance to the second fluid stream passing between the inlet and outlet ports and, wherein the fluid flow flows substantially axially through the prime mover, the vanes being positioned substantially axially within the body of the prime mover so as to extend to the periphery thereof in order that the fluid flow enters (AS 2) and leaves (E) the body of the prime mover substantially axially but with a transverse component.

5. A device according to any one of the preceding claims, comprising fluid control means for varying the ratio of the effective combined cross-sectional area of the fluid passages through the prime mover relative to the effective cross-sectional area of the inlet port or the outlet port(s).

6. A device according to Claim 5, wherein the fluid control means is coupled to a governor so that as the fluid speed decreases, the fluid control means is operative for reducing the effective combined cross-sectional area of the passages of the prime mover.

7. A device according to any one of the preceding claims, wherein means is provided in the prime mover for influencing distribution of the fluid passing over the vanes so that the fluid flow is substantially even over the length thereof.

8. A device according to any one of the preceding claims, wherein Venturi ducts are formed in the vicinity of the exhaust port, the Venturi ducts receiving the first fluid stream at the upstream end thereof, the fluid stream from the prime mover mixing at the outlet ports with the first fluid stream at the downstream end of the Venturi ducts.

9. A device according to any one of the preceding claims, wherein an aerofoil section is formed on the housing in the vicinity of the outlet port in order to enhance the fluid pressure differential between the inlet and outlet ports.

10. A device according to any one of the preceding claims, wherein the housing is shaped such that the direction of flow of the second fluid stream is changed as the second fluid stream flows through the device, the direction of flow of the first fluid stream being substantially unchanged by the device.

**Patentansprüche**

1. Vorrichtung zum Gewinnen von Energie aus einem strömenden Fluid, die aufweist: ein Gehäuse (8), das eine Antriebsmaschine (2) aufweist, die darin drehbar montiert ist, wobei das Gehäuse so ausgeführt ist, daß die Antriebsmaschine vor einem ersten Fluidstrom (AS1), der auf die Vorrichtung auftrifft, abgeschirmt wird, und daß der erste Fluidstrom um das Gehäuse herum so gelenkt wird, daß der erste Fluidstrom nicht direkt auf die Antriebsmaschine einwirkt; eine Eintrittsöffnung (14), die vom Gehäuse im Abstand angeordnet ist, und die einen zweiten Fluidstrom (AS2), der auf die Vorrichtung an der Eintrittsöffnung auftrifft, so aufnimmt, daß der erste und der zweite Fluidstrom, wenn sie auf die Vorrichtung auftreffen, zumindestens im wesentlichen voneinander unabhängig sind, wobei die Eintrittsöffnung so angeordnet ist, daß der zweite Fluidstrom in das Gehäuse über eine Öffnung gelenkt wird, die unmittelbar stromaufwärts von der Antriebsmaschine vorhanden ist, um die Antriebsmaschine anzutreiben; und eine Austrittsöffnung (22), die gestattet, daß der zweite Fluidstrom das Gehäuse verläßt;
   dadurch gekennzeichnet, daß das Gehäuse, das die Antriebsmaschine umgibt, ein Volumen aufweist, das im wesentlichen größer ist als das der Antriebsmaschine, so daß die Querschnittsfläche der Öffnung in einer Richtung quer zur Strömungsrichtung durch die Öffnung des zweiten Fluidstromes im wesentlichen kleiner ist als die Querschnittsfläche des Gehäuses, durch das der zweite Fluidstrom quer hindurchgeht, während der zweite Fluidstrom aus der Antriebsmaschine austritt, wodurch der zweite Fluidstrom ein wesentliches Absinken der Geschwindigkeit über die Antriebsmaschine erfährt und durch die Antriebsmaschine so abgelenkt wird, daß er radial oder zumindestens teilweise axial mit Bezugnahme auf die Drehungsachse der Antriebsmaschine strömt, wobei das Gehäuse so ausgeführt ist, daß der erste Fluidstrom um das Gehäuse herum und an der Austrittsöffnung vorbei so verläuft, daß an der Austrittsöffnung eine Saugwirkung hervorgerufen wird, wodurch die Energiegewinnung aus dem strömenden Fluid verstärkt wird.

2. Vorrichtung nach Anspruch 1, bei der das Fluid entweder Luft, wobei die Vorrichtung für eine Gewinnung von Energie aus dem Wind eingerichtet ist, oder Wasser ist, wobei die Vorrichtung für die Gewinnung von hydroelektrischer oder hydromechanischer Energie eingerichtet ist.

3. Vorrichtung nach Anspruch 1 oder 2, bei der die Antriebsmaschine (2) mit einer Vielzahl von Flügeln (18) versehen ist, die so geformt sind, daß sie einen Widerstand für den zweiten Fluidstrom, der zwischen der Eintrittsöffnung und der Austrittsöffnung strömt, darstellen, wobei die Antriebsmaschine so ausgeführt ist, daß der Fluidstrom, der über die Flügel hinweggeht, in einer Richtung strömt, die im wesentlichen senkrecht zur Drehungsachse der Antriebsmaschine verläuft.

**4.** Vorrichtung nach Anspruch 1 oder 2, bei der die Antriebsmaschine (2) mit einer Vielzahl von Flügeln (18) versehen ist, die so geformt sind, daß sie einen Widerstand für den zweiten Fluidstrom, der zwischen der Eintrittsöffnung und der Austrittsöffnung strömt, darstellen, und bei der der Fluidstrom im wesentlichen axial durch die Antriebsmaschine strömt, wobei die Flügel im wesentlichen axial innerhalb des Gehäuses der Antriebsmaschine so angeordnet sind, daß sie sich zum Umfang dieses erstrecken, damit der Fluidstrom im wesentlichen axial in das Gehäuse der Antriebsmaschine gelangt (AS2) und dieses verläßt (E), aber mit einer Querkomponente.

**5.** Vorrichtung nach einem der vorhergehenden Ansprüche, die eine Fluidsteuereinrichtung aufweist, die das Verhältnis der effektiven kombinierten Querschnittsfläche der Fluiddurchgänge durch die Antriebsmaschine relativ zur effektiven Querschnittsfläche der Eintrittsöffnung oder der Austrittsöffnung verändert.

**6.** Vorrichtung nach Anspruch 5, bei der die Fluidsteuereinrichtung mit einem Regler so gekoppelt ist, daß, während die Geschwindigkeit des Fluids abnimmt, die Fluidsteuereinrichtung wirksam wird, um die effektive kombinierte Querschnittsfläche der Durchgänge der Antriebsmaschine zu reduzieren.

**7.** Vorrichtung nach einem der vorhergehenden Ansprüche, bei der eine Einrichtung in der Antriebsmaschine dafür vorhanden ist, daß die Verteilung des Fluids, das über die Flügel hinweggeht, so beeinflußt wird, daß der Fluidstrom im wesentlichen gleichmäßig über deren Länge verläuft.

**8.** Vorrichtung nach einem der vorhergehenden Ansprüche, bei der Venturi-Kanäle in der Nähe der Austrittsöffnung gebildet werden, und wobei die Venturi-Kanäle den ersten Fluidstrom an deren stromaufwärts gelegenen Ende aufnehmen und sich der Fluidstrom von der Antriebsmaschine an den Austrittsöffnungen mit dem ersten Fluidstrom am stromabwärts gelegenen Ende der Venturi-Kanäle vermischt.

**9.** Vorrichtung nach einem der vorhergehenden Ansprüche, bei der ein aerodynamisches Profil am Gehäuse in der Nähe der Austrittsöffnung gebildet wird, um das Fluiddruckgefälle zwischen der Eintrittsöffnung und der Austrittsöffnung zu erhöhen.

**10.** Vorrichtung nach einem der vorhergehenden Ansprüche, bei der das Gehäuse so gestaltet ist, daß die Strömungsrichtung des zweiten Fluidstromes verändert wird, während der zweite Fluidstrom durch die Vorrichtung strömt, wobei die Strömungsrichtung des ersten Fluidstromes im wesentlichen durch die Vorrichtung nicht verändert wird.

**Revendications**

**1.** Dispositif pour extraire l'énergie d'un fluide en mouvement, comprenant: un logement (8) comportant une machine motrice (2) montée en rotation en son sein, ledit logement étant configuré pour protéger la machine motrice contre un premier courant de fluide (AS 1) incident sur le dispositif, et pour diriger le premier courant de fluide autour du logement, si bien que le premier courant de fluide n'interagit pas directement avec la machine motrice; un orifice d'entrée (14) qui est espacé du logement pour recevoir un second courant de fluide (AS 2) incident sur le dispositif audit orifice d'entrée, si bien que les premier et second courants de fluide, lorsqu'ils sont incidents sur le dispositif, sont au moins essentiellement indépendants l'un de l'autre, l'orifice d'entrée étant arrangé pour diriger le second courant de fluide dans le logement via une ouverture immédiatement en amont de la machine motrice pour entraîner la machine motrice, et un orifice de sortie (22) pour permettre au second courant de fluide de quitter le logement;

caractérisé en ce que le logement entourant la machine motrice possède un volume qui est essentiellement supérieur à celui de la machine motrice, si bien que la superficie de section de l'ouverture dans une direction transversale à la direction d'écoulement du second courant de fluide passant par l'ouverture est essentiellement inférieure à la superficie de section du logement à travers lequel passe le second courant de fluide en direction transversale lorsque le second courant de fluide s'évacue de la machine motrice, par lequel le second courant de fluide subit une chute importante quant à sa vitesse lorsqu'il traverse la machine motrice et est dévié par la machine motrice de façon à s'écouler radialement ou, au moins en partie, axialement par rapport à l'axe de rotation de la machine motrice, le logement étant configuré de telle sorte que le premier courant de fluide passant autour du

10

logement et devant l'orifice de sortie est tel qu'il donne naissance à un effet d'aspiration à l'orifice de sortie, augmentant ainsi l'extraction d'énergie à partir du fluide en mouvement.

2. Dispositif selon la revendication 1, dans lequel le fluide est, soit de l'air lorsque le dispositif est arrangé pour extraire de l'énergie éolienne, soit de l'eau lorsque le dispositif est arrangé pour générer de l'énergie hydroélectrique ou hydromécanique.

3. Dispositif selon la revendication 1 ou 2, dans lequel la machine motrice (2) est munie de plusieurs aubes (18) profilées pour procurer une résistance au second courant de fluide passant entre les orifices d'entrée et de sortie, la machine motrice étant configurée de telle sorte que l'écoulement de fluide passant par-dessus les aubes s'écoule dans une direction essentiellement perpendiculaire à l'axe de rotation de la machine motrice.

4. Dispositif selon la revendication 1 ou 2, dans lequel la machine motrice (2) est munie de plusieurs aubes (18) profilées pour procurer une résistance au second courant de fluide passant entre les orifices d'entrée et de sortie, et dans lequel le courant de fluide s'écoule en direction essentiellement axiale à travers la machine motrice, les aubes étant positionnées en direction essentiellement axiale à l'intérieur du corps de la machine motrice de façon à s'étendre jusqu'à la périphérie de cette dernière pour que le courant de fluide pénètre (AS 2) et quitte (E) le corps de la machine motrice en direction essentiellement axiale, mais avec un composant transversal.

5. Dispositif selon l'une quelconque des revendications précédentes, comprenant un moyen de réglage de fluide pour faire varier le rapport entre la superficie de section effective combinée des passages de fluide à travers la machine motrice et la superficie de section effective de l'orifice d'entrée ou bien du ou des orifices de sortie.

6. Dispositif selon la revendication 5, dans lequel le moyen de réglage de fluide est couplé à un régulateur de telle sorte que, à mesure où la vitesse du fluide diminue, le moyen de réglage de fluide est mis en service pour réduire la superficie de section effective combinée des passages à travers la machine motrice.

7. Dispositif selon l'une quelconque des revendications précédentes, dans lequel on procure un moyen dans la machine motrice pour influencer la distribution du fluide passant par-dessus les aubes, si bien que l'écoulement de fluide est essentiellement uniforme sur toute sa longueur.

8. Dispositif selon l'une quelconque des revendications précédentes, dans lequel on forme des conduits Venturi à proximité de l'orifice d'évacuation, les conduits Venturi recevant le premier courant de fluide à leur extrémité amont, le courant de fluide provenant de la machine motrice se mélangeant aux orifices de sortie avec le premier courant de fluide à l'extrémité aval des conduits Venturi.

9. Dispositif selon l'une quelconque des revendications précédentes, dans lequel on façonne un profilé aérodynamique sur le logement à proximité de l'orifice de sortie dans le but d'augmenter le différentiel de pression de fluide entre les orifices d'entrée et de sortie.

10. Dispositif selon l'une quelconque des revendications précédentes, dans lequel le logement est configuré de telle sorte que la direction d'écoulement du second courant de fluide se modifie lorsque le second courant de fluide s'écoule à travers le dispositif, la direction d'écoulement du premier courant de fluide restant essentiellement inchangée à l'intervention du dispositif.

2nd Air
Stream

AS2

14

12

A

10

FIG.1a.

16

8

20

1st Air
Stream

AS1

B B

C C

2

18

4

24

FIG.1b.

1st Air
Stream

28

22

24

2

24

8

18

24

26

8

22

28

32

14

30

Air
Stream

FIG.2.

36

34

FIG.3.

FIG.4a.

FIG.5a.

FIG.4b.

FIG.5b.

FIG.6a.

FIG.6b.

FIG.7a.

FIG.7b.

FIG.8a.

FIG.8b.